# EUROPEAN PATENT SPECIFICATION

(11) **EP 4 083 724 B1**
(45) Date of publication and mention of the grant of the patent: **16.10.2024**
(21) Application number: 22170394.5
(22) Date of filing: 27.04.2022
(51) Int. Cl.: G05B 19/042, E02F 9/20, E02F 9/22, E02F 3/43, F16H 59/44, F16H 59/36, F16H 59/68, F16H 61/00, F16H 61/40

(54) **CONTROL SYSTEM FOR CONTROLLING AN ARM OF A CONSTRUCTION VEHICLE**
STEUERUNGSSYSTEM ZUR STEUERUNG EINER ARM EINER BAUMASCHINE
SYSTÈME DE COMMANDE D'UN BRAS D'UN VÉHICULE DE CONSTRUCTION

(30) Priority: 28.04.2021 IT 202100010748
(43) Date of publication of application: 02.11.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(56) References cited:
- EP-A1- 3 719 356
- US-B2- 10 464 565
- US-B2- 6 633 805

## Description

### TECHNICAL FIELD

The present invention concerns an improved control system for controlling a controllable arm of a heavy vehicle, in particular a control system for automatically reducing a jerk of the controllable arm when the heavy vehicle is in digging operation and is travelling in reverse direction, in order to allow for lower aggressive digging manoeuvres.

Moreover, the present invention concerns a related control method for controlling the controllable arm, a computer program product executing the control method, a heavy vehicle comprising the control system, and a control unit comprised in the control system.

### BACKGROUND OF THE INVENTION

As known, a heavy vehicle provided with a controllable arm is suitable to perform different tasks due to its arm capability and its ability to manipulate, carry and dump a load. Examples of such heavy vehicle are a wheel loader, a telehandler or an excavator, where the controllable arm carries, for example, a bucket as shown in US6633805B2.

During use of such heavy vehicles, the drivers driving them and controlling the controllable arm must carefully operate the controllable arm when the latter is loaded, in order to avoid spilling of the loaded product (e.g., soil, grain, etc.). In particular, in order to be more efficient and reduce the overall time to perform the required task, the drivers generally fully fill the bucket with the loaded product and manually control the controllable arm in rapidly performing consecutive manoeuvres, so that it is not unusual that part of the loaded product spills over and falls on the ground, thus forcing the drivers to perform additional manoeuvres to recover the spilled-over material and increasing the overall time and complexity of the task.

Therefore, the need is felt to reduce the spill-over of loaded material from the bucket when operating the heavy vehicle.

### SUMMARY OF THE INVENTION

An aim of the present invention is to satisfy the above-mentioned needs.

The aforementioned aim is reached by a control system for controlling a controllable arm of a heavy vehicle, as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a heavy vehicle provided with a controllable arm, according to an embodiment of the present invention; and
- Figure 2 is a block diagram schematically showing the heavy vehicle of Figure 1, according to an embodiment of the present invention.

### DETAILED DESCRIPTION OF THE INVENTION

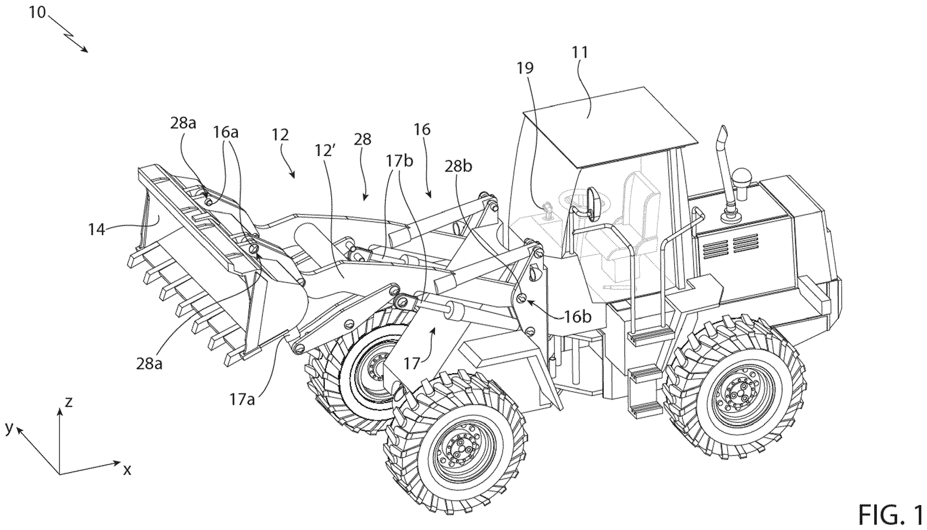

Figure 1 shows, in a triaxial Cartesian reference system defined by axis X, Y and Z, a vehicle 10 provided with a controllable arm 12. In particular, the vehicle 10 is a heavy vehicle (in details, a work vehicle), such as a compact wheel loader, a telehandler or an excavator (Figure 1 shows a compact wheel loader), driven by a user.

The controllable arm 12 comprises a bucket 14 and a boom 12' coupling the bucket 14 to a main body of the vehicle 10. The controllable arm 12 is provided with at least one joint 16 actuated by a respective joint actuator 17 (hydraulic actuator, in particular a cylindrical actuator). As a non-limiting example, Figure 1 shows the controllable arm 12 having two joints 16 (i.e., a tilt joint and a boom lift joint, indicated respectively with the reference numerals 16a and 16b) and three respective joint actuators 17 (i.e., a tilt actuator and two boom lift actuators, indicated respectively with the reference numerals 17a and 17b).

Moreover, the vehicle 10 includes an input command acquisition device 19, such as a joystick (in the following indicated as joystick 19), for example placed in a cabin 11 of the vehicle 10. In use, the user operates the joystick 19 to control the controllable arm 12, i.e. to control the trajectory of the controllable arm 12.

As better discussed in the following, the user manually selects a level of jerk of the vehicle 10 (also called in the following manually selected jerk) among a plurality of manually selectable jerks when the vehicle 10 is not in a predefined working mode (e.g., digging operation) and the vehicle 10 is travelling in forward direction, while the jerk level is automatically selected when the vehicle 10 is in the predefined working mode and the vehicle 10 is not travelling in forward direction (e.g., is travelling in reverse direction).

In particular, upon occurrence of specific conditions as better described in the following, the user manually controls the level of jerk of the controllable arm 12, so that the aggressiveness of the manoeuvre carried out by the controllable arm 12 can be modified depending on the vehicle working conditions and situations. For example, the user can choose among a plurality of jerk levels (e.g., 1 to 3, where 1 corresponds to low jerk, 2 corresponds to medium jerk and 3 corresponds to high jerk) to set a lower aggressiveness of the manoeuvre of the controllable arm 12 (suitable for manoeuvres requiring slow movements and high accuracy) or a higher aggressiveness of the manoeuvre of the controllable arm 12 (suitable for manoeuvres requiring fast movements and low accuracy). The jerk level is set by the user by operating an aggressiveness setting mean 29 that can be, as non-limiting examples, an aggressiveness setting switch 29, for example carried by the joystick 19 or by the vehicle 10 (e.g., located in the cabin 11) .

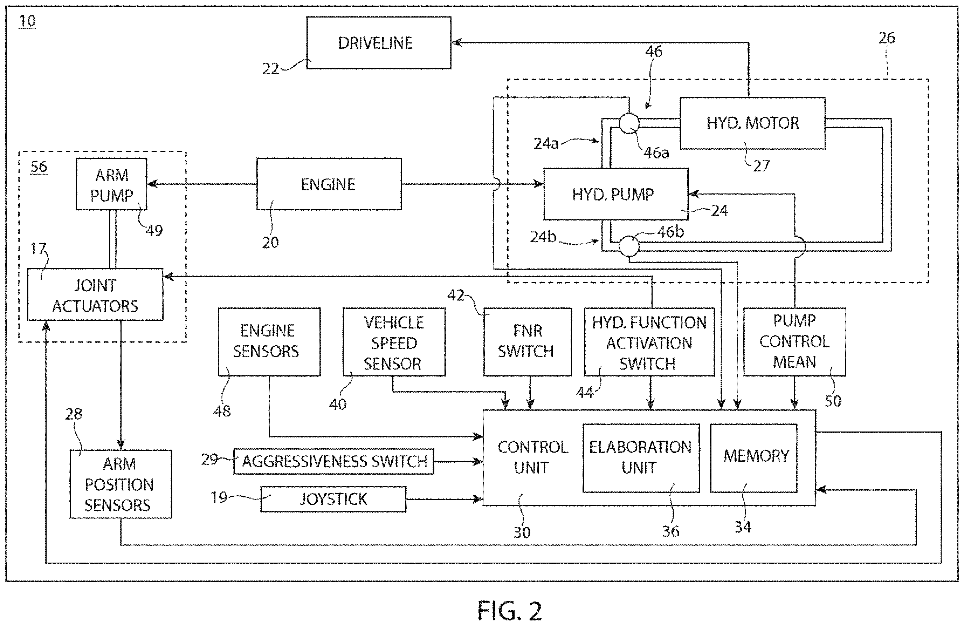

As illustrated in Figure 2, the vehicle 10 further comprises an engine 20 (e.g., a thermal engine) mechanically coupled to an arm pump 49 (e.g., hydraulic pump). The vehicle 10 further comprises an arm hydraulic circuit 56 including the joint actuators 17 and the arm pump 49 providing hydraulic power to the joint actuators 17 in order to actuate the joints 16 of the controllable arm 12. In particular, the arm pump 49 pumps a fluid (e.g., a substantially incompressible fluid such as oil) to the joint actuators 17, thus actuating the latter.

The vehicle 10 further comprises a motor hydraulic circuit 26 with a hydraulic pump 24 mechanically coupled to the engine 20 and a hydraulic motor 27 powered by the hydraulic pump 24 and powering a driveline 22 of the vehicle 10. In particular, the hydraulic pump 24 pumps a fluid (e.g., a substantially incompressible fluid such as oil) to the hydraulic motor 27, thus actuating the latter. More in details, the hydraulic pump 24 is fluidly connected to a first conduit, referred to in the following as forward hydraulic line 24a, extending between the hydraulic pump 24 and the hydraulic motor 27 and being pressurized when the vehicle 10 moves forward; and the hydraulic pump 24 is fluidly connected to a second conduit, referred to in the following as reverse hydraulic line 24b, extending between the hydraulic pump 24 and the hydraulic motor 27 and being pressurized when the vehicle 10 moves rearward.

Alternatively, the vehicle 10 comprises an electric motor (not shown) powering the driveline 22.

A control unit 30 (e.g., a vehicle control unit or a dedicated controller or control unit) of the vehicle 10 is electrically coupled to the joint actuators 17. As better discussed in the following, the control unit 30 acquires input data from the vehicle 10 and, based on these input data, controls the joint actuators 17. As an example, the control unit 30 comprises a data storage unit 34 (referred to in the following as memory 34, such as a RAM memory) and an elaboration unit 36 electrically coupled between them.

As better discussed in the following, in use, the control unit 30 receives sensor signals from a plurality of sensor means. The sensor signals are indicative of working conditions of the vehicle 10, such as of a digging operation.

In particular, in use, the control unit 30 receives a vehicle speed signal from a vehicle speed sensor 40 carried by the vehicle 10. The vehicle speed signal is indicative of a speed of the vehicle 10 travelling on the ground. For example, the vehicle speed is obtained from a wheel speed sensor of a known type, or is calculated based on an engine rotation speed.

The control unit 30 further receives a transmission state signal indicative of a currently engaged state of a transmission of the vehicle 10 (i.e., forward, neutral or reverse transmission). For example, the transmission state signal is acquired from a FNR switch 42 of the vehicle 10, of a per se known type.

The control unit 30 further receives a hydraulic function state signal indicative of a state of the arm hydraulic circuit 56 (i.e., the arm hydraulic circuit 56 is enabled or disabled, and the fluid is circulating in the arm hydraulic circuit 56 or not, thus providing or not power to the joint actuators 17). For example, the hydraulic function state signal is acquired from a hydraulic function activation switch 44 of the vehicle 10, of a per se known type, switching on or off the arm hydraulic circuit 56 (i.e., controlling the joint actuators 17).

The control unit 30 further receives hydraulic pressure signals from one or more pressure sensors 46 in the motor hydraulic circuit 26, indicative of the hydraulic pressure of the fluid circulating in the motor hydraulic circuit 26. In particular, a first hydraulic pressure signal is received from a first pressure sensor 46a, placed in the forward hydraulic line 24a of the motor hydraulic circuit 26. Moreover, optionally, a second hydraulic pressure signal is received from a second pressure sensor 46b, placed in the reverse hydraulic line 24b of the motor hydraulic circuit 26 so that the control unit 30 can compute a relative difference of the first and second hydraulic pressure signals.

The control unit 30 further acquires, from one or more engine sensors 48 carried by the engine 20, an engine speed signal indicative of the rotational speed of the engine 20. For example, the one or more engine sensors 48 are rotational speed sensors.

The control unit 30 further acquires a boom position signal and a bucket position signal from arm position sensors 28 carried by the controllable arm 12, the boom position signal and the bucket position signal being indicative of the positions of the boom 12' and, respectively, of the bucket 14. For example, the arm position sensors 28 acquire data of the joints 16 (e.g., in the joint space) . According to an exemplary and non-limiting embodiment of the present invention, illustrated in Figure 1, the arm position sensors 28 comprise a tilt angular sensor 28a coupled to the tilt joint 16a and a boom angular sensor 28b coupled to the boom lift joint 16b. The tilt angular sensor 28a and the boom angular sensor 28b acquire the angular positions of the tilt joint 16a and, respectively, of the boom lift joint 16b. From these data, the positions of the boom 12' and of the bucket 14 are calculated accorded to per se known techniques, for example by the control unit 10. As an example, the position of the boom 12' is calculated as a relative angle of the boom 12' with respect to the ground position (e.g., an angular displacement of the boom 12' with respect to an angular position of the boom 12' when the latter is set in ground position, e.g. when the boom lift actuators 17b are fully retracted) and the position of the bucket 14 is calculated as a relative angle of the bucket 14 with respect to a dumping position of the bucket 14 (e.g., an angular displacement of the bucket 14 with respect to an angular position of the bucket 14 when the latter is set in dumping position, e.g. when the tilt actuator 17a is fully retracted).

The control unit 30 further acquires a pump signal indicative of a control current of the displacement of the hydraulic pump 24. In particular, the displacement of the hydraulic pump 24 is controllable through an input current (i.e., the control current) that is a function of the engine speed and, more in details, is based on a characteristic curve in two variables that are the engine speed and the input current previously used. For example, the pump signal is acquired from a pump control mean 50 operable to control the displacement of the hydraulic pump 24.

The control unit 30 further acquires the selected jerk level set by the user through the aggressiveness setting switch 29.

During use of the vehicle 10, the control unit 30 (in details, the elaboration unit 36) acquires the vehicle speed signal, the transmission state signal, the hydraulic function state signal, the first hydraulic pressure signal, the engine speed signal, the boom and bucket position signals, the pump signal and the selected jerk level both at a considered (or current) time instant (e.g., t=t*) and during a preceding predetermined period of time (e.g., ΔT) immediately preceding the considered time instant t=t*. In other words, these signals are acquired at t*-ΔT < t ≤ t*. For example, the acquired signals are temporarily stored in the memory 34.

If the transmission state signal at the considered time instant t=t* is not indicative of the reverse state (e.g., is indicative of the forward state), the control unit 30 (in details, the elaboration unit 36) generates at the considered time instant t=t* a jerk command that is indicative of the jerk level manually selected by the user at the considered time instant t=t*.

If the transmission state signal at the considered time instant t=t* is indicative of the reverse state, the control unit 30 (in details, the elaboration unit 36) compares the vehicle speed signal, the transmission state signal, the hydraulic function state signal, the first hydraulic pressure signal, the engine speed signal, the boom and bucket position signals and the pump signal, acquired during the preceding predetermined period of time ΔT, with respective reference signals that are, for example, stored in the memory 34. This is done to assess if a predetermined working condition (i.e., digging condition and reverse engaged) of the vehicle 10 is verified. Based on the result of the comparison, the control unit 30 (in details, the elaboration unit 36) generates at the considered time instant t=t* the jerk command that is indicative either of the jerk level manually selected by the user at the considered time instant t=t* (in details, if the predetermined working condition of the vehicle 10 is not verified, i.e. the vehicle 10 is not in digging condition and/or the forward is engaged) or of a predetermined jerk level (in details, if the predetermined working condition of the vehicle 10 is verified, i.e. the vehicle 10 is in digging condition and the reverse is engaged).

The jerk command generated by the control unit 30 is used to control the controllable arm 12, according to per se known techniques.

In details, the predetermined jerk level (or, for simplicity, the predetermined jerk) is either the lowest jerk level that the user can manually select or a jerk level that is lower than the jerk level that has been manually selected at the considered time instant t=t*. According to an embodiment of the present invention, the predetermined jerk level is the lowest jerk level that the user can manually select (i.e., jerk level equal to 1), thus corresponding to the lowest aggressiveness that can be selected for the control of the controllable arm 12. According to a different embodiment of the present invention, the predetermined jerk level corresponds to the jerk level manually selected at the considered time instant t=t*, that is decreased by a predefined jerk quantity (e.g., if the user selects the jerk level to be equal to 3 and the predefined jerk quantity is equal to 1, the predetermined jerk level is 2), so that the aggressiveness of the manoeuvres of the controllable arm 12 is lower than the manually selected one but still dependent on the latter. According to a further embodiment of the present invention, the predetermined jerk level is lower than any jerk level that can be manually selected by the user (e.g., the predetermined jerk level is 0), so that the aggressiveness of the manoeuvre of the controllable arm 12 is minimized.

Moreover, the duration of the preceding predetermined period of time ΔT can be manually selected by the user, for example at the starting of the vehicle 10. According to a non-limiting example, the preceding predetermined period of time ΔT is about 3 seconds.

More in particular, the jerk command at the considered time instant t=t* is set to be indicative of the predetermined jerk level if the transmission state is in reverse state at the considered time instant t=t* and is in forward state during the preceding predetermined period of time ΔT, and if the following conditions are verified during the preceding predetermined period of time ΔT:
- the vehicle speed is lower than a threshold vehicle speed (e.g., equal to about 3 Km/h);
- the hydraulic function state is enabled (i.e., the arm hydraulic circuit 56 is enabled);
- the hydraulic pressure of the fluid of the forward hydraulic line 24a of the motor hydraulic circuit 26 is greater than a threshold hydraulic pressure (e.g., equal to about 250bar) ;
- the rotational speed of the engine 20 is greater than a threshold engine speed (e.g., equal to about 1500 rpm);
- the position of the boom 12' is comprised in a predefined boom position range (for example, the relative distance of the boom 12' with respect to the ground is lower than a boom threshold distance, e.g. equal to about 50cm);
- the position of the bucket 14 is comprised in a predefined bucket position range (for example, the relative angle of the bucket 14 with respect to the ground is comprised between a lower bucket threshold angle and an upper bucket threshold angle, e.g. equal to about +/-10°); and
- the control current of the hydraulic pump 24 is greater than a threshold control current (e.g., equal to about 600mA).

On the other hand, the jerk command at the considered time instant t=t* is set to be indicative of the jerk level manually selected by the user at the considered time instant t=t* if the transmission state is not in reverse state at the considered time instant t=t* or is in reverse state at the considered time instant t=t* but not in forward state during the preceding predetermined period of time ΔT or if at least one of the previously described conditions is not verified at one or more time instants that are comprised in the preceding predetermined period of time ΔT (in other words, at any time instant t*-ΔT < t < t*).

The control unit 30, the aggressiveness setting switch 29, the engine sensors 48, the vehicle speed sensor 40, the FNR switch 42, the hydraulic function activation switch 44, the pump control mean 50, the arm position sensors 28, the pressure sensors 46 and optionally the joystick 19 form a control system of the vehicle 10. The control system implements, by means of the control unit 30, a control method as previously discussed to generate the jerk command and thus to control the controllable arm 12.

In view of the foregoing, the advantages of the control system according to the invention are apparent.

In particular, the control system of the vehicle 10 allows to automatically reduce the jerk of the controllable arm 12 when the vehicle 10 is in digging operation and is travelling in reverse direction (i.e., the transmission state is reverse state), so that a product (e.g., soil, grain, etc.) loaded in the bucket 14 is not spilled over on the ground while the vehicle 10 is performing the manoeuvres. Nonetheless, when the vehicle 10 is not in digging operation and is travelling in forward direction, the jerk is the one manually selected by the user, so that in this case the controllable arm 12 can be operated with an higher aggressiveness (i.e., at higher speed) that is chosen by the user.

This automatic control increases the comfort and the efficiency of the user driving the vehicle 10 during digging operations.

By automatically selecting the proper boom and bucket aggressiveness during digging operation, the digging operation is simplified and its efficiency is optimized. In particular, when the user approaches the pile with the vehicle 10 in forward, the aggressiveness is the one manually selected by the user while, when the user engages the reverse with the bucket 14 fully loaded, the boom and bucket aggressiveness is automatically reduced in order to avoid spilling over of the loaded product from the bucket 14, thus increasing the comfort of the user and the efficiency of the operation.

It is clear that modifications can be made to the described control system, which do not extend beyond the scope of protection defined by the claims.

For example, although previously only jerk levels have been discussed, the same considerations apply with a more general selected jerk command provided by the user. For example, the selected jerk command can be a jerk level (i.e., constant value of jerk) or a jerk profile (i.e., time-dependent and time-varying profiles of jerk).

Moreover, the bucket 14 can be substituted by a more general loading element (e.g., a manure bucket or a fork).

## Claims

1. Control unit (30) configured to be coupled to:
- an aggressiveness setting mean (29) operable by a user to manually select a manually selected jerk among a plurality of manually selectable jerks, for controlling a controllable arm (12) of a heavy vehicle (10) operable by the user;
- a transmission state selecting mean (42) operable by the user to select a transmission state for controlling a transmission of the heavy vehicle (10);
- a plurality of sensor means (48, 40, 44, 46, 50, 28) configured to acquire a respective plurality of sensor signals indicative of working conditions of the heavy vehicle (10); and
- the joint actuators (17) of the controllable arm (12),
wherein the control unit (30) is configured to:
- receive, at a current time instant (t*) and during a preceding predetermined period of time (ΔT) immediately preceding the current time instant (t*), the transmission state from the transmission state selecting mean (42), the manually selected jerk from the aggressiveness setting mean (29) and the sensor signals from the sensor means;
- if the transmission state at the current time instant (t*) is not indicative of a reverse state, generate at the current time instant (t*) a jerk command that is indicative of the manually selected jerk selected at the current time instant (t*);
the control unit is **characterized in that** it is configured to:
- if the transmission state at the current time instant (t*) is indicative of the reverse state, compare the transmission state and the sensor signals, acquired during the preceding predetermined period of time (ΔT), with reference signals to assess if a digging condition of the heavy vehicle (10) is verified;
- if the digging condition of the heavy vehicle (10) is not verified, generate at the current time instant (t*) the jerk command that is indicative of the manually selected jerk selected at the current time instant (t*);
- if the digging condition of the heavy vehicle (10) is verified, generate at the current time instant (t*) the jerk command that is indicative of a predetermined jerk,
wherein the jerk command is configured to control a jerk of the controllable arm (12), and
wherein the predetermined jerk is either a lowest manually selectable jerk among the manually selectable jerks, or is lower than the manually selected jerk selected at the current time instant (t*).

2. Control system for controlling a controllable arm (12) of a heavy vehicle (10) operable by a user, the control system comprising:
- an aggressiveness setting mean (29) operable by the user to manually select a manually selected jerk among a plurality of manually selectable jerks, for controlling the controllable arm (12);
- a transmission state selecting mean (42) operable by the user to select a transmission state for controlling a transmission of the heavy vehicle (10);
- a plurality of sensor means (48, 40, 44, 46, 50, 28) configured to acquire a respective plurality of sensor signals indicative of working conditions of the heavy vehicle (10); and
- a control unit according to claim 1 (30) coupled to the aggressiveness setting mean (29), the transmission state selecting mean (42) and the sensor means.

3. Control system according to claim 2, wherein the sensor means (48, 40, 44, 46, 50, 28) comprise:
- a vehicle speed sensor (40) configured to acquire a vehicle speed signal indicative of a speed of the heavy vehicle (10) ;
- a hydraulic function activation switch (44) operable to generate a hydraulic function state signal indicative of a state of an arm hydraulic circuit (56) of the heavy vehicle (10) ;
- one or more pressure sensors (46) configured to acquire a hydraulic pressure signal indicative of an hydraulic pressure of a fluid in a motor hydraulic circuit (26) of the heavy vehicle (10);
- one or more engine sensors (48) configured to acquire an engine speed signal indicative of a rotational speed of an engine (20) of the heavy vehicle (10);
- arm position sensors (28) configured to acquire a boom position signal and a bucket position signal indicative of positions of a boom (12') of the controllable arm (12) and, respectively, of a loading element (14) of the controllable arm (12); and
- a pump control mean (50) operable to generate a pump signal indicative of a control current of a hydraulic pump (24) of the motor hydraulic circuit (26).

4. Control system according to claim 3, wherein the predetermined working condition of the heavy vehicle (10) is verified:
if the transmission state during the preceding predetermined period of time (ΔT) is indicative of the forward state, and
if during the preceding predetermined period of time (ΔT), the following conditions are verified:
- the speed of the heavy vehicle (10) is lower than a threshold vehicle speed;
- the state of an arm hydraulic circuit (56) is enabled;
- the hydraulic pressure of the fluid in the motor hydraulic circuit (26) is greater than a threshold hydraulic pressure;
- the rotational speed of the engine (20) is greater than a threshold engine speed;
- the positions of the boom (12') and of the loading element (14) are comprised in a predefined boom position range and, respectively, in a predefined bucket position range; and
- the control current of the hydraulic pump (24) is greater than a threshold control current.

5. Control system according to claim 3 or 4, wherein the hydraulic pressure signal is acquired through a first pressure sensor (46a) of the one or more pressure sensors (46), the first pressure sensor (46a) being placed at a forward hydraulic line (24a) of the motor hydraulic circuit (26).

6. Control system according to anyone of the preceding claims, wherein the predetermined jerk corresponds to the manually selected jerk selected at the current time instant (t*), decreased by a predefined jerk quantity.

7. Control system according to anyone of claims 2-5, wherein the predetermined jerk is lower than any of the manually selectable jerks.

8. Control system according to anyone of the preceding claims, wherein the preceding predetermined period of time (ΔT) has a duration that is manually selected by the user.

9. Heavy vehicle (10) comprising a control system according to anyone of claims 1-8.

10. Control method for controlling a controllable arm (12) of a heavy vehicle (10) operable by a user and comprising a control system, the control system comprising:
- an aggressiveness setting mean (29) operable by the user to manually select a manually selected jerk among a plurality of manually selectable jerks, for controlling the controllable arm (12);
- a transmission state selecting mean (42) operable by the user to select a transmission state for controlling a transmission of the heavy vehicle (10);
- a plurality of sensor means (48, 40, 44, 46, 50, 28) configured to acquire a respective plurality of sensor signals indicative of working conditions of the heavy vehicle (10); and
- a control unit (30) coupled to the aggressiveness setting mean (29), the transmission state selecting mean (42) and the sensor means,
the control method comprising the steps of:
- receiving by the control unit (30), at a current time instant (t*) and during a preceding predetermined period of time (ΔT) immediately preceding the current time instant (t*), the transmission state from the transmission state selecting mean (42), the manually selected jerk from the aggressiveness setting mean (29) and the sensor signals from the sensor means; and
- if the transmission state at the current time instant (t*) is not indicative of a reverse state, generating by the control unit (30) at the current time instant (t*) a jerk command that is indicative of the manually selected jerk selected at the current time instant (t*);
the control method being **characterized by** the steps of:
- if the transmission state at the current time instant (t*) is indicative of the reverse state, comparing by the control unit (30) the transmission state and the sensor signals, acquired during the preceding predetermined period of time (ΔT), with reference signals to assess if a digging condition of the heavy vehicle (10) is verified;
- if the digging condition of the heavy vehicle (10) is not verified, generating by the control unit (30) at the current time instant (t*) the jerk command that is indicative of the manually selected jerk selected at the current time instant (t*);
- if the digging condition of the heavy vehicle (10) is verified, generating by the control unit (30) at the current time instant (t*) the jerk command that is indicative of a predetermined jerk,
wherein the jerk command is configured to control a jerk of the controllable arm (12), and
wherein the predetermined jerk is either a lowest manually selectable jerk among the manually selectable jerks, or is lower than the manually selected jerk selected at the current time instant (t*).

11. Computer program product comprising instructions to cause the control unit (30) of claim 1 to execute the steps of the method of claim 10.

## Patentansprüche

1. Steuereinrichtung (30), die dazu eingerichtet ist, verbunden zu werden mit:
- einem Aggressivitätseinstellmittel (29), das von einem Benutzer bedienbar ist, um eine manuell ausgewählte Ruckbewegung aus einer Mehrzahl von manuell auswählbaren Ruckbewegungen manuell auszuwählen, um einen steuerbaren Arm (12) eines Schwerfahrzeugs (10) zu steuern, das von dem Benutzer bedienbar ist;
- einem Getriebezustandsauswahlmittel (42), das von dem Benutzer bedienbar ist, um einen Getriebezustand zum Steuern eines Getriebes des Schwerfahrzeugs (10) auszuwählen;
- einer Mehrzahl von Sensoreinrichtungen (48, 40, 44, 46, 50, 28), die dazu eingerichtet sind, eine entsprechende Mehrzahl von Sensorsignalen zu erfassen, die für Betriebsbedingungen des Schwerfahrzeugs (10) kennzeichnend sind; und
- den Gelenkbetätigungseinrichtungen (17) des steuerbaren Arms (12),
wobei die Steuereinrichtung (30) dazu eingerichtet ist:
- zu einem aktuellen Zeitpunkt (t*) und während einer vorhergehenden vorbestimmten Zeitspanne (ΔT) unmittelbar vor dem aktuellen Zeitpunkt (t*) den Getriebezustand von dem Getriebezustandsauswahlmittel (42), die manuell ausgewählte Ruckbewegung von dem Aggressivitätseinstellmittel (29) und die Sensorsignale von den Sensoreinrichtungen zu empfangen;
- wenn der Getriebezustand zu dem aktuellen Zeitpunkt (t*) nicht für einen Rückwärtszustand kennzeichnend ist, einen Ruckbefehl zu dem aktuellen Zeitpunkt (t*) zu erzeugen, der für die manuell ausgewählte Ruckbewegung kennzeichnend ist, die zu dem aktuellen Zeitpunkt (t*) ausgewählt ist;
wobei die Steuereinrichtung **dadurch gekennzeichnet ist, dass** sie dazu eingerichtet ist:
- den Getriebezustand und die Sensorsignale, die während der vorhergehenden vorbestimmten Zeitspanne (ΔT) erfasst wurden, mit Referenzsignalen zu vergleichen, um zu beurteilen, ob ein Grabzustand des Schwerfahrzeugs (10) verifiziert wird, wenn der Getriebezustand zu dem aktuellen Zeitpunkt (t*) für den Rückwärtszustand kennzeichnend ist;
- den Ruckbefehl zu dem aktuellen Zeitpunkt (t*) zu erzeugen, der für die manuell ausgewählte Ruckbewegung kennzeichnend ist, die zu dem aktuellen Zeitpunkt (t*) ausgewählt ist, falls der Grabzustand des Schwerfahrzeugs (10) nicht verifiziert wurde;
- den Ruckbefehl zu dem aktuellen Zeitpunkt (t*) zu erzeugen, der für eine vorbestimmte Ruckbewegung kennzeichnend ist, falls der Grabzustand des Schwerfahrzeugs (10) verifiziert wurde,
wobei der Ruckbefehl dazu eingerichtet ist, eine Ruckbewegung des steuerbaren Arms (12) zu steuern, und
wobei die vorbestimmte Ruckbewegung entweder die niedrigste manuell auswählbare Ruckbewegung von den manuell auswählbaren Ruckbewegungen ist oder niedriger als die zu dem aktuellen Zeitpunkt (t*) manuell ausgewählte Ruckbewegung ist.

2. Steuersystem zum Steuern eines steuerbaren Arms (12) eines Schwerfahrzeugs (10), das von einem Benutzer bedienbar ist, wobei das Steuersystem umfasst:
- ein Aggressivitätseinstellmittel (29), das von dem Benutzer bedienbar ist, um eine manuell ausgewählte Ruckbewegung von einer Mehrzahl von manuell auswählbaren Ruckbewegungen auszuwählen, um den steuerbaren Arm (12) manuell zu steuern,
- ein Getriebezustandsauswahlmittel (42), das von dem Benutzer bedienbar ist, um einen Getriebezustand zum Steuern eines Getriebes des Schwerfahrzeugs (10) auszuwählen;
- eine Mehrzahl von Sensoreinrichtungen (48, 40, 44, 46, 50, 28), die dazu eingerichtet sind, eine entsprechende Mehrzahl von Sensorsignalen zu erfassen, die für Betriebsbedingungen des Schwerfahrzeugs (10) kennzeichnend sind; und
- eine Steuereinrichtung (30) nach Anspruch 1, die mit dem Aggressivitätseinstellmittel (29), dem Getriebezustandsauswahlmittel (42) und den Sensoreinrichtungen verbunden ist.

3. Steuersystem nach Anspruch 2, wobei die Sensoreinrichtungen (48, 40, 44, 46, 50, 28) umfassen:
- einen Fahrzeuggeschwindigkeitssensor (40), der dazu eingerichtet ist, ein Fahrzeuggeschwindigkeitssignal zu erfassen, das für eine Geschwindigkeit des Schwerfahrzeugs (10) kennzeichnend ist;
- einen Hydraulikfunktions-Betätigungsschalter (44), der betätigbar ist, um ein Hydraulikfunktions-Zustandssignal zu erzeugen, das für einen Zustand eines Arm-Hydraulikkreislaufs (56) des Schwerfahrzeugs (10) kennzeichnend ist;
- einen oder mehrere Drucksensoren (46), die dazu eingerichtet sind, ein hydraulisches Drucksignal zu erfassen, das für einen hydraulischen Druck eines Fluids in einem Motor-Hydraulikkreislauf (26) des Schwerfahrzeugs (10) kennzeichnend ist;
- einen oder mehrere Motorsensoren (48), die dazu eingerichtet sind, ein Motorgeschwindigkeitssignal zu erfassen, das für eine Drehgeschwindigkeit eines Motors (20) des Schwerfahrzeugs (10) kennzeichnend ist;
- Armpositionssensoren (28), die dazu eingerichtet sind, ein Auslegerpositionssignal und ein Schaufelpositionssignal zu erfassen, die für Positionen eines Auslegers (12') des steuerbaren Arms (12) beziehungsweise eines Ladeelements (14) des steuerbaren Arms (12) kennzeichnend sind; und
- ein Pumpensteuermittel (50), das betätigbar ist, um ein Pumpensignal zu erzeugen, das für einen Steuerstrom einer hydraulischen Pumpe (24) des Motor-Hydraulikkreislaufs (26) kennzeichnend ist.

4. Steuersystem nach Anspruch 3, wobei die vorbestimmte Betriebsbedingung des Schwerfahrzeugs (10) verifiziert wird:
wenn der Getriebezustand während der vorhergehenden vorbestimmten Zeitspanne (ΔT) für den Vorwärtszustand kennzeichnend ist, und
wenn während der vorhergehenden vorbestimmten Zeitspanne (ΔT) die folgenden Bedingungen verifiziert werden:
- die Geschwindigkeit des Schwerfahrzeugs (10) ist niedriger als eine Grenzfahrzeuggeschwindigkeit;
- der Zustand eines Arm-Hydraulikkreislaufs (56) ist aktiviert;
- der hydraulische Druck des Fluids in dem Motor-Hydraulikkreislauf (26) ist größer als ein Grenzhydraulikdruck;
- die Drehgeschwindigkeit des Motors (20) ist größer als eine Grenzmotorgeschwindigkeit;
- die Positionen des Auslegers (12') und des Ladeelements (14) liegen in einem vordefinierten Auslegerpositionsbereich und in einem entsprechend vordefinierten Schaufelpositionsbereich; und
- der Steuerstrom der hydraulischen Pumpe (24) ist größer als ein Grenzsteuerstrom.

5. Steuersystem nach Anspruch 3 oder 4, wobei das hydraulische Drucksignal durch einen ersten Drucksensor (46a) von dem einen oder den mehreren Drucksensoren (46) erfasst wird, wobei der erste hydraulische Drucksensor (46a) an einer vorderen hydraulischen Leitung (24a) des Motor-Hydraulikkreislaufs (26) angeordnet ist.

6. Steuersystem nach einem der vorhergehenden Ansprüche, wobei die vorbestimmte Ruckbewegung der zu dem aktuellen Zeitpunkt (t*) manuell ausgewählten Ruckbewegung entspricht, die um eine vordefinierte Ruckgröße verringert wird.

7. Steuersystem nach einem der Ansprüche 2 bis 5, wobei die vorbestimmte Ruckbewegung geringer ist als eine der manuell auswählbaren Ruckbewegungen.

8. Steuersystem nach einem der vorhergehenden Ansprüche, wobei die vorhergehende vorbestimmte Zeitspanne (ΔT) eine Dauer aufweist, die von dem Benutzer manuell ausgewählt wird.

9. Schwerfahrzeug (10), umfassend ein Steuersystem nach einem der Ansprüche 1 bis 8.

10. Steuerungsverfahren zum Steuern eines steuerbaren Arms (12) eines Schwerfahrzeugs (10), das von einem Benutzer bedienbar ist und ein Steuersystem umfasst, wobei das Steuersystem umfasst:
- ein Aggressivitätseinstellmittel (29), das von dem Benutzer bedienbar ist, um eine manuell auswählbare Ruckbewegung von einer Mehrzahl von manuell auswählbaren Ruckbewegungen auszuwählen, um den steuerbaren Arm (12) manuell zu steuern;
- ein Getriebezustandsauswahlmittel (42), das von dem Benutzer bedienbar ist, um einen Getriebezustand zum Steuern eines Getriebes des Schwerfahrzeugs (10) auszuwählen;
- eine Mehrzahl von Sensoreinrichtungen (48, 40, 44, 46, 50, 28), die dazu eingerichtet sind, eine entsprechende Mehrzahl von Sensorsignalen zu erfassen, die für Betriebsbedingungen des Schwerfahrzeugs (10) kennzeichnend sind; und
- eine Steuereinrichtung (30), die mit dem Aggressivitätseinstellmittel (29), dem Getriebezustandsauswahlmittel (42) und den Sensoreinrichtungen verbunden ist,
wobei das Steuerungsverfahren die folgenden Schritte umfasst:
- Empfangen des Getriebezustands von dem Getriebezustandsauswahlmittel (42), der manuell ausgewählten Ruckbewegung von dem Aggressivitätseinstellmittel (29) und der Sensorsignale von den Sensoreinrichtungen durch die Steuereinrichtung (30) zu einem aktuellen Zeitpunkt (t*) und während einer vorhergehenden vorbestimmten Zeitspanne (ΔT) unmittelbar vor dem aktuellen Zeitpunkt (t*); und
- Erzeugen eines Ruckbefehls durch die Steuereinrichtung (30) zu dem aktuellen Zeitpunkt (t*), der für die manuell ausgewählte Ruckbewegung kennzeichnend ist, die zu dem aktuellen Zeitpunkt (t*) ausgewählt ist, wenn der Getriebezustand zu dem aktuellen Zeitpunkt (t*) nicht für einen Rückwärtszustand kennzeichnend ist;
wobei das Steuerungsverfahren durch die folgenden Schritte gekennzeichnet ist:
- Vergleichen des Getriebezustands und der Sensorsignale, die während der vorhergehenden vorbestimmten Zeitspanne (ΔT) erfasst wurden, mit Referenzsignalen durch die Steuereinrichtung (30), um zu beurteilen, ob eine Grabbedingung des Schwerfahrzeugs (10) verifiziert wird, wenn der Getriebezustand zu dem aktuellen Zeitpunkt (t*) für den Rückwärtszustand kennzeichnend ist,
- Erzeugen des Ruckbefehls durch die Steuereinrichtung (30) zu dem aktuellen Zeitpunkt (t*), der für die manuell ausgewählte Ruckbewegung kennzeichnend ist, die zu dem aktuellen Zeitpunkt (t*) ausgewählt ist, wenn die Grabbedingung des Schwerfahrzeugs (10) nicht verifiziert wurde,
- Erzeugen des Ruckbefehls durch die Steuereinrichtung (30) zu dem aktuellen Zeitpunkt (t*), der für eine vorbestimmte Ruckbewegung kennzeichnend ist, wenn die Grabbedingung des Schwerfahrzeugs (10) verifiziert wird,
wobei der Ruckbefehl dazu eingerichtet ist, eine Ruckbewegung des steuerbaren Arms (12) zu steuern, und
wobei die vorbestimmte Ruckbewegung entweder eine niedrigste manuell auswählbare Ruckbewegung von den manuell auswählbaren Ruckbewegungen oder geringer als die manuell ausgewählte Ruckbewegung ist, die zu dem aktuellen Zeitpunkt (t*) ausgewählt ist.

11. Computerprogramm-Produkt mit Befehlen, um die Steuereinrichtung (30) nach Anspruch 1 zu veranlassen, die Schritte des Verfahrens nach Anspruch 10 auszuführen.

## Revendications

1. Unité de commande (30) configurée pour être couplée à :
- un moyen de réglage d'agressivité (29) actionnable par un utilisateur pour sélectionner manuellement une saccade sélectionnée manuellement parmi une pluralité de saccades sélectionnables manuellement, permettant de commander un bras commandable (12) d'un véhicule lourd (10) actionnable par l'utilisateur ;
- un moyen de sélection d'état de transmission (42) actionnable par l'utilisateur pour sélectionner un état de transmission permettant de commander une transmission du véhicule lourd (10) ;
- une pluralité de moyens de détection (48, 40, 44, 46, 50, 28) configurés pour acquérir une pluralité respective de signaux de capteur indicatifs de l'état de fonctionnement du véhicule lourd (10) ; et
- les actionneurs d'articulation (17) du bras commandable (12),
dans lequel l'unité de commande (30) est configurée pour :
- recevoir, à un instant courant (t*) et pendant une période de temps prédéterminée précédente (ΔT) précédant immédiatement l'instant courant (t*), l'état de transmission de la part du moyen de sélection d'état de transmission (42), la saccade sélectionnée manuellement de la part du moyen de réglage d'agressivité (29) et les signaux de capteur de la part des moyens de détection ;
- si l'état de transmission à l'instant courant (t*) n'est pas indicatif d'un état inverse, générer à l'instant courant (t*) une commande de saccade qui est indicative de la saccade sélectionnée manuellement à l'instant courant (t*) ;
l'unité de commande est **caractérisée en ce qu'**elle est configurée pour :
- si l'état de transmission à l'instant courant (t*) est indicatif de l'état inverse, comparer l'état de transmission et les signaux de capteur, acquis pendant la période de temps prédéterminée précédente (ΔT), avec des signaux de référence pour évaluer si un état de terrassement du véhicule lourd (10) est vérifié ;
- si l'état de terrassement du véhicule lourd (10) n'est pas vérifié, générer à l'instant courant (t*) la commande de saccade qui est indicative de la saccade sélectionnée manuellement à l'instant courant (t*) ;
- si l'état de terrassement du véhicule lourd (10) n'est pas vérifié, générer à l'instant courant (t*) la commande de saccade qui est indicative d'une saccade prédéterminée,
dans lequel la commande de saccade est configurée pour commander une saccade du bras commandable (12), et
dans lequel la saccade prédéterminée est soit une saccade la plus basse sélectionnable manuellement parmi les saccades sélectionnables manuellement, soit une saccade inférieure à la saccade sélectionnée manuellement à l'instant courant (t*).

2. Système de commande permettant de commander un bras commandable (12) d'un véhicule lourd (10) actionnable par un utilisateur, le système de commande comprenant :
- un moyen de réglage d'agressivité (29) actionnable par l'utilisateur pour sélectionner manuellement une saccade sélectionnée manuellement parmi une pluralité de saccades sélectionnables manuellement, permettant de commander un bras commandable (12) ;
- un moyen de sélection d'état de transmission (42) actionnable par l'utilisateur pour sélectionner un état de transmission permettant de commander une transmission du véhicule lourd (10) ;
- une pluralité de moyens de détection (48, 40, 44, 46, 50, 28) configurés pour acquérir une pluralité respective de signaux de capteur indicatifs de l'état de fonctionnement du véhicule lourd (10) ; et
- une unité de commande selon la revendication 1 (30) couplée au moyen de réglage d'agressivité (29), au moyen de sélection d'état de transmission (42) et aux moyens de détection.

3. Système de commande selon la revendication 2, dans lequel les moyens de détection (48, 40, 44, 46, 50, 28) comprennent :
- un capteur de vitesse de véhicule (40) configuré pour acquérir un signal de vitesse de véhicule indiquant une vitesse du véhicule lourd (10) ;
- un commutateur d'activation de fonction hydraulique (44) actionnable pour générer un signal d'état de fonction hydraulique indicatif de l'état d'un circuit hydraulique de bras (56) du véhicule lourd (10) ;
- un ou plusieurs capteurs de pression (46) configurés pour acquérir un signal de pression hydraulique indicatif d'une pression hydraulique d'un fluide dans un circuit hydraulique de moteur (26) du véhicule lourd (10) ;
- un ou plusieurs capteurs de moteur (48) configurés pour acquérir un signal de régime moteur indicatif d'une vitesse de rotation d'un moteur (20) du véhicule lourd (10) ;
- capteurs de position de bras (28) configurés pour acquérir un signal de position de flèche et un signal de position de godet indicatifs des positions d'une flèche (12') du bras commandable (12) et, respectivement, d'un élément de chargement (14) du bras commandable (12) ; et
- un moyen de commande de pompe (50) actionnable pour générer un signal de pompe indicatif d'un courant de commande d'une pompe hydraulique (24) du circuit hydraulique du moteur (26).

4. Système de commande selon la revendication 3, dans lequel l'état de fonctionnement prédéterminé du véhicule lourd (10) est vérifié :
si l'état de transmission pendant la période de temps prédéterminée précédente (ΔT) est indicatif de l'état direct, et
si pendant la période de temps prédéterminée précédente (ΔT), les conditions suivantes sont vérifiées :
- la vitesse du véhicule lourd (10) est inférieure à une vitesse de véhicule seuil ;
- l'état d'un circuit hydraulique de bras (56) est activé ;
- la pression hydraulique du fluide dans le circuit hydraulique du moteur (26) est supérieure à une pression hydraulique seuil ;
- la vitesse de rotation du moteur (20) est supérieure à un régime moteur seuil ;
- les positions de la flèche (12') et de l'élément de chargement (14) sont comprises dans une plage de positions de flèche prédéfinie et, respectivement, dans une plage de positions de godet prédéfinie ; et
- le courant de commande de la pompe hydraulique (24) est supérieur à un courant de commande seuil.

5. Système de commande selon la revendication 3 ou la revendication 4, dans lequel le signal de pression hydraulique est acquis par l'intermédiaire d'un premier capteur de pression (46a) d'un ou de plusieurs capteurs de pression (46), le premier capteur de pression (46a) étant placé au niveau d'une ligne hydraulique avant (24a) du circuit hydraulique du moteur (26).

6. Système de commande selon l'une quelconque des revendications précédentes, dans lequel la saccade prédéterminée correspond à la saccade sélectionnée manuellement à l'instant courant (t*), réduite d'une quantité de saccades prédéfinie.

7. Système de commande selon l'une quelconque des revendications 2 à 5, dans lequel la saccade prédéterminée est inférieure à n'importe laquelle des saccades sélectionnables manuellement.

8. Système de commande selon l'une quelconque des revendications précédentes, dans lequel la période de temps prédéterminée précédente (ΔT) a une durée qui est sélectionnée manuellement par l'utilisateur.

9. Véhicule lourd (10) comprenant un système de commande selon l'une quelconque des revendications 1 à 8.

10. Procédé de commande permettant de commander un bras commandable (12) d'un véhicule lourd (10) actionnable par un utilisateur et comprenant un système de commande, le système de commande comprenant :
- un moyen de réglage d'agressivité (29) actionnable par l'utilisateur pour sélectionner manuellement une saccade sélectionnée manuellement parmi une pluralité de saccades sélectionnables manuellement, permettant de commander un bras commandable (12) ;
- un moyen de sélection d'état de transmission (42) actionnable par l'utilisateur pour sélectionner un état de transmission permettant de commander une transmission du véhicule lourd (10) ;
- une pluralité de moyens de détection (48, 40, 44, 46, 50, 28) configurés pour acquérir une pluralité respective de signaux de capteur indicatifs de l'état de fonctionnement du véhicule lourd (10) ; et
- une unité de commande (30) couplée au moyen de réglage d'agressivité (29), au moyen de sélection d'état de transmission (42) et aux moyens de détection,
le procédé de commande comprenant les étapes consistant à :
- recevoir, par le biais de l'unité de commande (30), à un instant courant (t*) et pendant une période de temps prédéterminée précédente (ΔT) précédant immédiatement l'instant courant (t*), l'état de transmission de la part du moyen de sélection d'état de transmission (42), la saccade sélectionnée manuellement de la part du moyen de réglage d'agressivité (29) et les signaux de capteur de la part des moyens de détection ; et
- si l'état de transmission à l'instant courant (t*) n'est pas indicatif d'un état inverse, générer par le biais de l'unité de commande (30), à l'instant courant (t*), une commande de saccade qui est indicative de la saccade sélectionnée manuellement à l'instant courant (t*) ;
le procédé de commande étant **caractérisé par** les étapes consistant à :
- si l'état de transmission à l'instant courant (t*) est indicatif de l'état inverse, comparer par le biais de l'unité de commande (30) l'état de transmission et les signaux de capteur, acquis pendant la période de temps prédéterminée précédente (ΔT), avec des signaux de référence pour évaluer si un état de terrassement du véhicule lourd (10) est vérifié ;
- si l'état de terrassement du véhicule lourd (10) n'est pas vérifié, générer par le biais de l'unité de commande (30), à l'instant courant (t*), la commande de saccade qui est indicative de la saccade sélectionnée manuellement à l'instant courant (t*) ;
- si l'état de terrassement du véhicule lourd (10) n'est pas vérifié, générer par le biais de l'unité de commande (30), à l'instant courant (t*), la commande de saccade qui est indicative d'une saccade prédéterminée,
dans lequel la commande de saccade est configurée pour commander une saccade du bras commandable (12), et
dans lequel la saccade prédéterminée est soit une saccade la plus basse sélectionnable manuellement parmi les saccades sélectionnables manuellement, soit une saccade inférieure à la saccade sélectionnée manuellement à l'instant courant (t*).

11. Produit reposant sur un programme informatique comprenant des instructions pour amener l'unité de commande (30) selon la revendication 1 à exécuter les étapes du procédé selon la revendication 10.
